# EUROPÄISCHE PATENTSCHRIFT

(11) **EP 0 575 762 B1**
(45) Veröffentlichungstag und Bekanntmachung des Hinweises auf die Patenterteilung: **24.04.1996**
(21) Anmeldenummer: 93108386.9
(22) Anmeldetag: 25.05.1993
(51) Int. Cl.: A47J 43/12, B01F 5/04

(54) **Vorrichtung zur Zubereitung von Milchschaum für Cappuccino**
Device preparing foamed milk for cappuccino
Dispositif à préparer du lait émulsifié pour cappuccino

(30) Priorität: 26.06.1992 DE 4220986
(43) Veröffentlichungstag der Anmeldung: 29.12.1993
(73) Patentinhaber: Eugster/Frismag AG, CH-8590 Romanshorn (CH)
(72) Erfinder: Mahlich, Gotthard, Dipl.-Ing., W-6242 Kronberg (DE)
(74) Vertreter: Schubert, Siegmar, Dipl.-Ing.

(56) Entgegenhaltungen:
- EP-A- 0 472 272
- DE-A- 3 538 041
- DE-A- 3 829 326
- DE-A- 3 942 169
- DE-A- 3 942 713
- DE-U- 8 907 183

## Beschreibung

Die Erfindung bezieht sich auf die Zubereitung von Milchschaum für Cappuccino (Milch-Kaffeegetränk) mittels Heißdampf gemäß Oberbegriff des Patentanspruches 1).
Espressomaschinen sind üblicherweise mit Vorrichtungen zur Heissdampferzeugung und einem Dampfauslassrohr zur Milchschaumerzeugung ausgestattet.
Zur Milchschaumerzeugung wird dabei die Ausströmöffnung des Dampfrohres, die durch eine Querschnittsverengung als Düse ausgebildet ist, in einem mit Milch gefüllten Gefäß von Hand so positioniert, daß sie die Oberfläche der Milch gerade berührt oder leicht in die Milch eintaucht. Nach Öffnen des Dampfhahnes reißt der aus der Düse austretende Dampf aus der Umgebung Luft mit, und es entsteht an der Flüssigkeitsgrenze ein Dampf-Luft-Milchgemisch und damit der gewünschte Milchschaum.
Dieses Verfahren verlangt vom Benutzer Übung und Feingefühl, da die Düse zur kontinuierlichen Erzeugung von Milchschaum immer in einer optimalen Position zur Milchoberfläche gehalten werden muss, was nur durch geschicktes Auf-und Abbewegen des Milchgefäßes zu erreicht ist.
Insbesondere für Haushalt-Espressomaschinen sind deshalb Vorrichtungen zur Vereinfachung der Zubereitung von Milchschaum entwickelt und bekannt geworden, bei denen mittels einer Zusatzeinrichtung zur Dampfausströmdüse das Dreiersystem Dampf-Luft-Milch so erzeugt werden kann, daß das permanente Suchen des Arbeitspunktes nicht mehr nötig ist.

Eine der bekannt gewordenen Vorrichtungen (DE 3538041 A1. Int.Cl. A 47J31/44 ) besteht aus einem oben geschlossenen und unten offenen Zylinder, der mantelförmig um die Ausströmdüse gelegt wird, und in welchem durch den aus der Düse austretenden Dampf ein Unterdruck entsteht. Wird das Unterteil des Zylinders, in dessen Mantelfläche sich Bohrungen befinden, unter den Flüssigkeitsspiegel eines mit Milch gefüllten Gefäßes getaucht, tritt durch die Bohrungen Milch in den Zylinder ein und flutet die Düse.
Durch eine weitere Bohrung im Oberteil des Zylinders, welche oberhalb des Flüssigkeitsspiegels verbleibt, wird durch den Unterdruck Luft angesaugt, und es entsteht vor der Dampfdüse innerhalb des Zylinders das Dreiersystem Dampf-Luft-Milch und der Milchschaum, der anschliessend aus der Öffnung des Zylinders austritt. Nachteils an dieser Vorrichtung ist, daß der entstehende Milchschaum relativ großporig ist, und in seiner Konsistenz von dem Fettgehalt der Milch beeinflusst wird.

Bei einer weiteren bekannt gewordenen Vorrichtung (CH 673 212 A5 Int.Cl.A47 J) wird vor der Ausströmdüse das untere offene Ende einer Luftleiteinrichtung so positioniert, daß es vom ausströmenden Dampf umströmt wird. Dar vor der Öffnung dadurch enstehende Unterdruck saugt Luft über die Luftleiteinrichtung an.
Beim Untertauchen dieser Vorrichtung unter den Flüssigkeitsspiegel eines mit Milch gefüllten Gefäßes, ergibt sich durch die über die Luftleiteinrichtung,deren obere Öffnung oberhalb des Flüssigkeitsspiegel verbleibt, angesaugte Luft ebenfalls das Dampf-Luft-Milchgemisch und der Milchschaum. Auch diese Vorrichtung arbeitet sehr instabil, reagiert empfindlich auf die angesaugte Luftmenge und liefert meist nur einen großporigen Milchschaum.
Bei einer abgewandelten Form dieser Vorrichtung weist das Dampfauslassrohr im Anschluss an seinen Düsenaustritt einen hohlen, nach unten hin offenen Fortsatz auf, in den sowohl die Dampfaustrittsöffnung der Düse, als auch die zum offenen Ende des Fortsatzes davor liegende untere Öffnung der Luftleiteinrichtung einmünden. Durch den ausströmenden Dampf entsteht in hohlen Fortsatz ein Unterdruck und es wird über die Luftleiteinrichtung Luft angesaugt, die sich im Fortsatz mit dem Dampf mischt.Beim Untertauchen dieser Vorrichtung unter den Flüssigkeitsspiegel eines mit Milch gefüllten Gefäßes, wobei die obere Öffnung der Luftleiteinrichtung oberhalb des Flüssigkeitsspiegels verbleibt, trifft das im Fortsatz entstandene Dampf-Luftgemisch nach Austreten aus der Öffnung des Fortsatzes auf die Milch, es ensteht das Dampf-Luft-Milchgemisch und damit der Milchschaum.

Bei einer dritten bekannt gewordenen Vorrichtung (European Patent Application 0 195 750 A2), die im Gegensatz zu den vorbeschriebenen Zusatzeinrichtungen nicht in ein mit Milch gefülltes Gefäss untergetaucht wird, sondern über eine Zuleitung Milch aus einem externen Gefäss ansaugt, sind der Dampfdüse kaskadenförmig ein zylindrischer Kondensationskanal, in den eine Milchansaugleitung mündet, und ein Mischkanal, in den eine Luftansaugleitung mündet, nachgeschaltet. An den Mischkanal schließt sich eine Emulgierkammer an, die eine Auslassöffnung aufweist.
Bei dieser Anordnung entsteht durch den aus der Düse strömenden Dampf in den nachgeschalteten Kanälen ein Unterdruck, und es werden schrittweise nacheinander erst im Kondensationskanal die durch den Unterdruck angesaugte Milch mit dem Dampf gemischt, dann in dem Mischkanal das Dampf-Milchgemisch mit der durch den Unterdruck über die Luftleitung angesaugte Luft gemischt, und schliesslich das Dreiergemisch Dampf-Milch-Luft in die Emulgierkammer gefördert, in welcher in einer Turbulenzzone der Milchschaum entsteht, der anschliessend aus der Kammeröffnung austritt.

Die vorbeschriebenen Vorrichtungen haben die Zubereitung von Milchschaum zwar deutlich erleichtert, da ihre Handhabung keine besdondere Geschicklichkeit des Benutzers erfordert, sie erkaufen diesen Vorteil aber mit einem relativ großen zusätzlichen technischen Aufwand, da zum Teil aufwendige oder präzise hergestellte Bauteile erforderlich sind. Da in den der Dampfdüse nachgeschalteten Kammern oder Kanälen durch sprunghafte Querschnittsveränderungen nach Austreten des Dampfes aus der Düse Carnotsche Stoßverluste und durch Todwassergebiete hinter Störstellen innerhalb der Kammersysteme weitere Strömungsverluste auftreten, bedürfen diese Vorrichtungen zur Kompensation der Strömungsverluste relativ großer Dampfdrücke, drücke, und erbringen in Verbindung mit Dampfgeneratoren, die nur einen geringen Dampfdruck erzeugen, kein verwertbares Aufschäumergebnis. Auch bei großen Dampfdrücken ist ihr Aufschäumergebnis und die Aufschäumzeit in engen Grenzen von der angesaugten Luftmenge und dem Fettgehalt der Milch abhängig.

Nach Bekanntwerden und dem Einsatz der vorbeschriebenen Aufschäumhilfen wurden inzwischen neuartige Haushalt-, Kaffee- und Espressozubereitungsmaschinen entwickelt, bei denen systembedingt nur geringe Dampfmengen und Dampfdrücke zur Verfügung stehen. Aus den vorbeschriebenen Gründen liefern die bekannten Aufschäumhilfen in Verbindung mit diesen Geräten kein zufriedenstellendes Arbeitsergebnis.

Eine Vorrichtung zum Zubereiten von Milchschaum für Cappuccino mit den Merkmalen des Oberbegriffs des Hauptanspruchs beschreibt die EP 0 472 272 A2. Dort verbreitert sich der Querschnitt des Venturirohres im Bereich der Einmündungen der Luftansaugleitung und der Milchansaugleitung abrupt und er verengt sich anschließend wieder abrupt. Dadurch werden aber Störstellen ausgebildet, die im Betrieb dieser Vorrichtung die Bildung von Milchschaum schon am Auslaß des Venturirohres fraglich machen.

Die DE 39 42 713 A1 beschreibt eine Vorrichtung zum Aufschäumen von Espresso mit einer Dampfdüse, in deren Mündung ein Venturirohr eingeschraubt ist, dessen lichter Querschnitt anfänglich gleich bleibt und sich dann kegelstumpfförmig erweitert. Etwa im oberen Drittel dieser kegelstumpfförmigen Erweiterung mündet in diese Diffusionsstrecke eine Luftleitung ein. Der das Venturirohr ausbildende Einsatz hat stromauf eine Stirnfläche, die sich rechtwinkelig zur Strömungsrichtung im Dampfrohr erstreckt. Die Querschnittsverengung erfolgt hier also sprunghaft, d. h. unter Ausbildung einer Störstelle.

Die Tatsache, daß dort die Luftleitung im Bereich des sich erweiternden Querschnitts des Venturirohres in dieses einmündet, ergibt einen verschlechterten Wirkungsgrad und auch größere Luftblasen, d.h. einen Milchschaum schlechterer Qualität, wenn dieses bekannte Dampfrohr in ein Milchgefäß eingetaucht wird.

Die vorliegende Erfindung geht von der Erkenntnis aus, daß der technische Aufbau einer Aufschäumhilfe so gestaltet werden kann, daß die Erzeugung von Milchschaum von optimaler Qualität auch mit Niederdruck-Dampfgeneratoren möglich ist, und daß gleichzeitig das System so zu vereinfachen ist, daß auf aufwendige, die Dampfdüse ummantelnde oder der Dampfdüse nachgeschaltete Aggregate, wie Mischkammern oder zusätzliche Unterdruckkanäle zur Erzeugung von Milchschaum, verzichtet werden kann.

Für die Erfindung wichtig ist es, am Ausstromende des Dampfrohres ein Venturirohr anzuordnen und diesem sowohl eine Luftansaugleitung als auch eine Milchansaugleitung so zuzuordnen, daß die Leitungen im Bereich des Düenhalses, der durch die Anschlußstelle von Beschleunigungstrecke und Auslaß gebildet ist, in das Venturirohr eimünden.

Die offene Eintrittsöffnung der Luftansaugleitung ist dabei so positioniert, daß sie, wenn das Venturirohr in ein mit Milch gefülltes Gefäß getaucht wird, oberhalb des Flüssigkeitsspiegels verbleibt, während die offene Eintrittsöffnung der Milchansaugöffnung unter dem Flüssigkeitsspiegel liegt. Dadurch werden, sobald das Venturirohr vom Dampf durchströmt und unter den Flüssigkeitsspiegel der Milch getaucht wird, bereits bei geringen Dampfdrücken Luft und Milch angesaugt und in der Diffusionsstrecke des Venturirohres mit dem Dampf vermischt. Das somit entstehende Dreiergemisch Dampf-Luft-Milch führt am Austritt des Venturirohres zur Bildung des gewünschten Milchschaumes. Um die geringen zur Verfügung stehenden Dampfdrücke optimal zu nutzen und um möglichst stabile Strömungsverhältnisse zu erreichen, ist zur Vermeidung von Stoßverlusten und durch Störstellen verursachte Strömungsverluste die Diffusionsstrecke des Venturirohres als glatter, störstellenfreier Kegelstumpfmantel ausgebildet. Dementsprechend, übergeht der lichte Querschritt des Dampfrohres glatt und störstellenfrei in den lichten Querschnitt des Venturirohres. Das Venturirohr weist eine konvergente, kegelstumpfartige Beschleunigungsstrecke auf, an die sich ein divergierender, kegelstumpfartiger Auslaß anschließt weitere Ausführungsformer sind in den abhängigen Ansprüchen definiert. Es empfiehlt sich, daß sowohl die Luftansaugleitung als auch die Milchansaugleitung unter einem Winkel gleich oder kleiner 90 zur Mantelfläche der Diffusionsstrecke des Venturirohres, gemessen in Richtung des Dampfeintrittes,im Venturirohr münden. Die vorgeschlagene Vorrichtung stellt eine überraschend einfache und gleichzeitig effiziente Aufschäumhilfe zur Erzeugung von Milchschaum dar. Sie ist unkompliziert und preiswert herzustellen, sie stellt an den Benutzer keine besonderen Handhabungsanforderungen und ermöglicht auch mit niedrigen Dampfdrücken, weitgehend unabhängig von dem Fettgehalt der Milch, optimale Aufschäumergebnisse.
Bei einer bevorzugten Ausführungsform der Erfindung ist das Ende des Dampfrohres direkt als Venturirohr ausgebildet, und beinhaltet in Höhe der Zone des im Venturirohr entstehen größten Unterdruckes eine Bohrung, die einen gemeinsamen Eintrittskanal in die Venturidüse für die angesaugte Luft und die angesaugte Milch bildet. Über das Dampfrohrende ist eine Hülse geschoben, die auf ihrer Innenseite eine, von der Oberseite der Hülse zur Unterseite der Hülse durchgehende, Nut aufweist.
Die Hülse wird auf dem Dampfrohr so positioniert, daß der Eintrittskanal des Venturirohres in dieser Nut mündet und damit die Zone des größten Unterdruckes im Venturirohr mit der Nut verbindet. Durch die untere durch die Nut gebildete Öffnung wird Milch, durch die obere durch die Nut gebildete Öffnung Luft angesaugt und beide Medien strömen durch den gemeinsamen Eintrittskanal in das Venturirohr. Es ist zweckmässig, die Hülse zum Zwecke der Reinigung abnehmbar auszubilden, und sowohl die Hülse als auch das Dampfrohr mit Zentriervorrichtungen zu versehen, um ein genaues Fluchten des Eintrittskanales mit der Nut zu gewährleisten.
Nach einem anderen Vorschlag der Erfindung liegt das Venturirohr in einem separaten Zusatzteil, welches über das Dampfrohr geschoben wird, und durch eine Schraub-,oder Steckverbindung mit dem Dampfrohr verbunden werden kann.
Die Verbindung von Dampfrohr und Zusatzteil ist dabei so ausgebildet, daß das Dampfrohr weitgehend störstellenfrei in die Beschleunigungsstrecke des Venturirohres übergeht.
Die Zusatzeinrichtung beinhaltet ebenfalls die Luftansaugleitung und die Milchansaugleitung. Die Luftansaugleitung wird durch eine im Oberteil des Zusatzteiles liegende Nut, die über einen Kanal mit der Zone des größten Unterdruckes im Venturirohr verbunden ist, und die Milchansaugleitung durch einen Querkanal, der die Aussenseite des Zusatzteiles mit der Zone des größten Unterdruckes im Venturirohr verbindet, gebildet.
Da der Heissdampf die von ihm durchströmten Teile der Vorrichtung stark aufheizt ist es zweckmässig, die mit der Milch in Berührung kommenden Teile aus einem schlecht wärmeleitenden Material herzustellen, um ein Anbacken von Milch zu vermeiden. Auf den Zeichnungen ist die Erfindung in mehreren Ausführungsformen dargestellt und zwar zeigen:
Fig.1) eine elektrisch betriebene Espressomaschine in schaubildlicher Darstellung mit einem Dampfrohr(1) und einem Dampfmengenregler(2).
Fig.2) in vergrößertem Maßstab als Seitenansicht, teilweise geschnitten, das Dampfrohr(1) mit dem als Venturirohr(3) ausgebildeten Dampfaustrittsende mit der Luftansaugleitung(5) und der Milchansaugleitung(6).

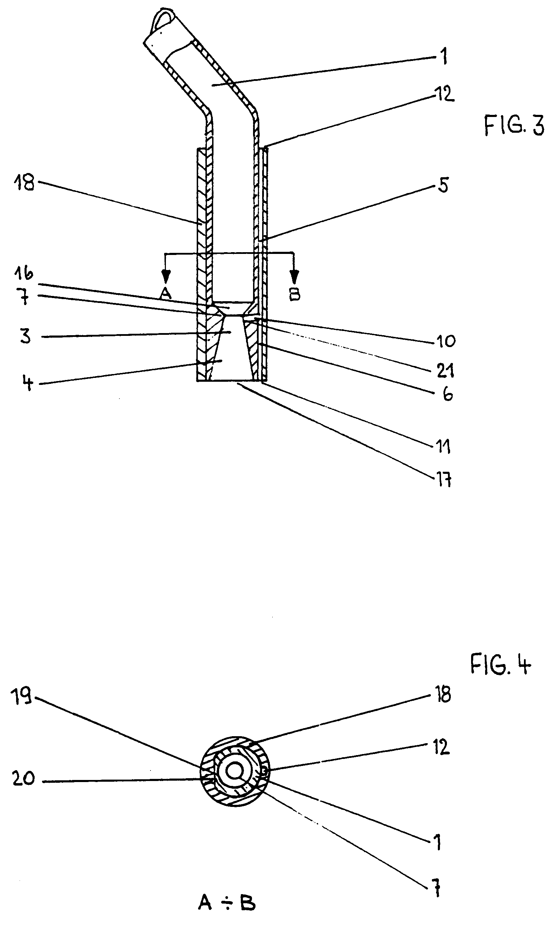

Fig.3) in vergrößertem Maßstab als Seitenansicht, teilweise geschnitten, eine abgewandelte Ausführungsform der Vorrichtung zur Erzeugung von Milchschaum mit einem gemeinsamen Eintrittskanal(10) in das Venturirohr(3) für Luft und Milch und einer Hülse (18) die die Luftansaugleitung (5) und die Milchansaugleitung (6) beinhaltet.

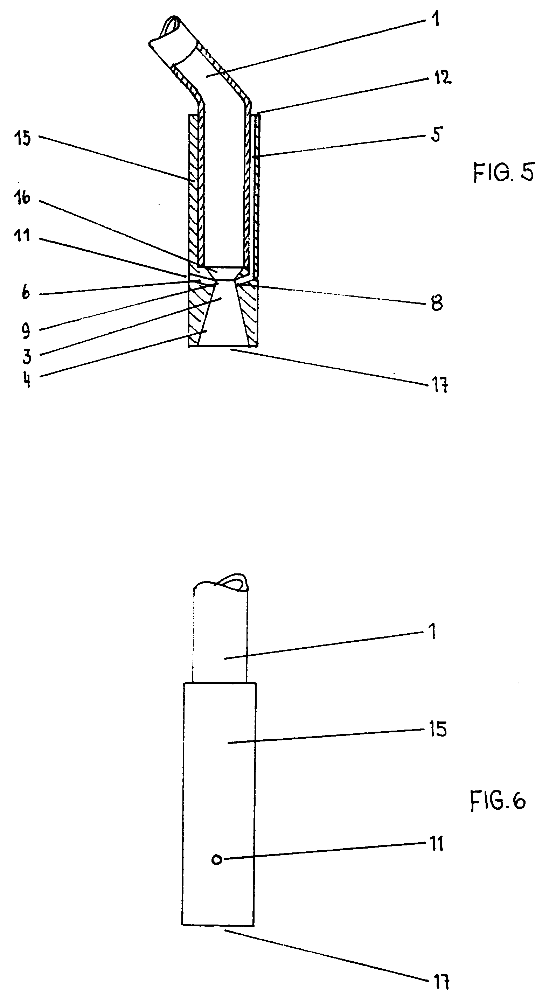

Fig.4) in vergrößertem Maßstab einen Schnitt A-B der Fig.3).
Fig.5) in vergrößertem Maßstab teilweise geschnitten, eine dritte Ausführungsform der Vorrichtung mit einem das Venturirohr (3), die Luftansaugleitung (5) und die Milchansaugleitung (6) beinhaltenden Zusatzteil (15).
Fig.6) in vergrößertem Maßstab eine Seitenansicht des Zusatzteiles (15) mit der Ansaugöffnung (11) der Milchansaugleitung (6).
In den Zeichnungen sind nur die unmittelbar zur Erfindung gehörenden oder zu ihrem Verständnis notwendigen Teile dargestellt. Auf die Darstellung von elektrischen Anschlüssen oder von Dampfgeneratoren wurde verzichtet.
Alle in den Zeichnungen fehlenden Teile für die Zubereitung von Espresso oder Dampf können einen an sich bekannten Aufbau haben.

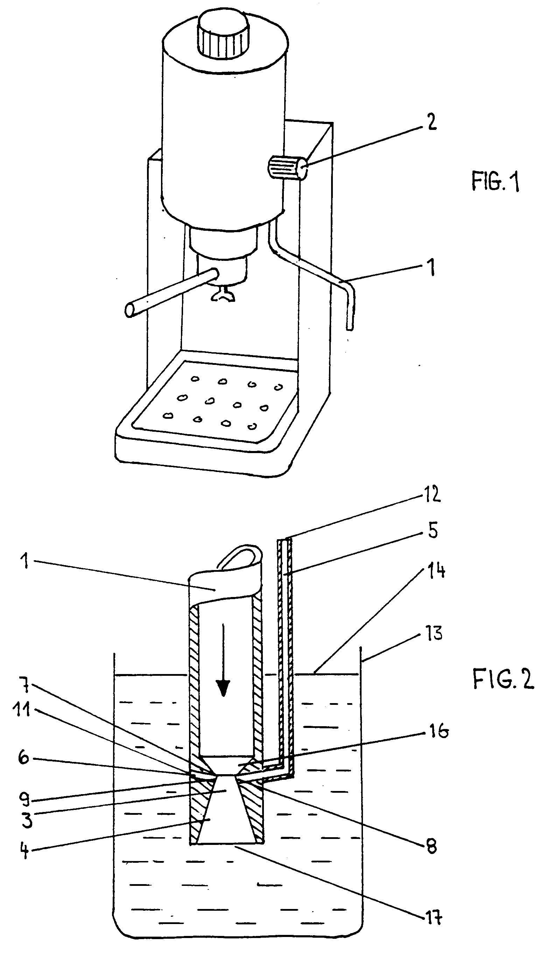

Die beschriebene erfindungsgemäße Vorrichtung nach Fig.2 zum Zubereiten von Milchschaum arbeitet wie folgt:
Das mit einem Dampfgenerator ausgestattete Gerät, welches zur Milchschaumbereitung verwendet werden soll, wird in üblicher Weise in Betrieb gesetzt. Nach Erreichen der gewünschten Dampftemperatur bei Boilergeneratoren oder bei Erreichen der Betriebstemperatur des Dampfgenerators bei Durchlauferhitzersystemen, wird durch Betätigen des Dampfmengenreglers (2) von Hand der Austritt des Dampfes aus dem Generator in das Dampfrohr freigegeben. Der Dampf strömt daraufhin im Sinne des in Fig.2) eingezeichneten Pfeiles durch das Dampfrohr (1) und tritt in das Venturirohr ein. Beim Durchströmen des Venturirohres (3) wird der Dampf in der Beschleunigungsstrecke (16) beschleunigt, erreicht im Düsenhals (7) seine grösste Geschwindigkeit und es entsteht dort die Zone des größten Unterdruckes.
Wird das Venturirohr (3) unter den Flüssigkeitsspiegel (14) eines mit Milch gefüllten Gefäßes (13) getaucht, werden durch den Unterdruck durch die im Venturirohr (3) in der Zone des größten Unterdruckes mündende Luftansaugleitung (5), deren offenes obere Ende (12) oberhalb des FlüssigkeitsspiegelS (14) verbleibt, Luft, und durch die ebenfalls im Venturirohr in der Zone des größten Unterdruckes mündende Milchansaugleitung (6), deren Ansaugöffnung (11) sich unterhalb des Flüssigkeitsspiegels der Milch befindet, Milch angesaugt. Damit bildet sich bereits in der Diffusionstrecke (4) des Venturirohres (3) das zur Milchschaumbereitung notwendige Dreiergemisch Dampf-Luft-Milch und am Auslass (17) des Venturirohres der gewünschte Milchschaum.

## Patentansprüche

1. Vorrichtung zum Zubereiten von Milchschaum für Cappuccino (Milch-Kaffeegetränk), die als Zusatzeinrichtung für Kaffeemaschinen, Espressomaschinen und andere Geräte benutzbar ist, die mit einem Heißdampfgenerator und mit einem Dampfrohr (1) ausgestattet sind, wobei am Ausströmende des Dampfrohres (1) ein Venturirohr (3) angeordnet ist, in das wenigstens eine Luftansaugleitung (5) sowie wenigstens eine Milchansaugleitung (6) einmünden,
**dadurch gekennzeichnet,**
daß der lichte Querschnitt des Dampfrohres (1) glatt und störstellenfrei in den lichten Querschnitt des Venturirohres (3) übergeht, daß das Venturirohr (3) eine konvergente, kegelstumpfartige Beschleunigungsstrecke (16) aufweist, an die sich ein divergierender, kegelstumpfartiger Auslaß (4) anschließt, und daß die Luftansaugleitung (5) und die Milchansaugleitung (6) im Bereich des Düsenhalses (7), der durch die Anschlußstelle von Beschleunigungsstrecke (16) und Auslaß (4) gebildet ist, in das Venturirohr (3) einmünden.

2. Vorrichtung nach Anspruch 1,
**dadurch gekennzeichnet,**
daß das Dampfrohr (1), das Venturirohr (3) und die Luftansaugleitung (5) einstückig ausgebildet sind.

3. Vorrichtung nach Anspruch 1 oder 2,
**dadurch gekennzeichnet,**
daß die Luftansaugleitung (5) und die Milchansaugleitung (6) unter einem Winkel gleich oder kleiner 90° zur Mantelfläche der Diffusionsstrecke (4), gemessen in Richtung des Düsenhalses (7) in das Venturirohr (3) einmünden.

4. Vorrichtung nach Anspruch 1,
**dadurch gekennzeichnet,**
daß die Luftansaugleitung (5) und die Milchansaugleitung (6) in einer separaten Hülse (18) liegen, die formschlüssig auf das Venturirohr (3) aufgebracht ist.

5. Vorrichtung nach Anspruch 4,
**dadurch gekennzeichnet,**
daß die Luftansaugleitung (5) und die Milchansaugleitung (6) durch eine in der Innenseite der Hülse (18) liegende Nut gebildet sind, die die Oberseite mit der Unterseite der Hülse (14) verbindet, und die mit dem Einlaßkanal (10) für Luft und/oder Milch in das Venturirohr (3) fluchtet.

6. Vorrichtung nach Anspruch 3 oder 4,
**dadurch gekennzeichnet,**
daß das Venturirohr (3) und die Hülse (18) eine Zentriervorrichtung (19) aufweisen, welche die funktionsgemäße Positionierung der Hülse (18) gewährleistet.

7. Vorrichtung nach einem der Ansprüche 4 - 6,
**dadurch gekennzeichnet,**
daß die Hülse (18) abnehmbar ist.

8. Vorrichtung nach Anspruch 1,
**dadurch gekennzeichnet,**
daß das Venturirohr (3) von einem separaten Zusatzteil (15) gebildet ist, welches ebenfalls die Luftansaugleitung (5) und die Milchansaugleitung (6) beinhaltet.

9. Vorrichtung nach Anspruch 8,
**dadurch gekennzeichnet,**
daß die Zusatzeinrichtung (15) mittels einer Schrauboder Steckverbindung formschlüssig mit dem Dampfrohr (1) verbunden ist.

10. Vorrichtung nach Anspruch 8 oder 9,
**dadurch gekennzeichnet,**
daß das Zusatzteil (15) abnehmbar ist.

11. Vorrichtung nach einem der Ansprüche 1 - 10,
**dadurch gekennzeichnet,**
daß die mit Milch in Verbindung kommenden Bauteile aus einem schlecht wärmeleitenden Material bestehen.

## Claims

1. A device for preparing foamed milk for cappuccino (milk - coffee beverage) which can be used as a attachment for coffee machines, espresso machines ad other appliances which are equipped with a superheated steam generator and with a steam tube (1), at the discharge end of the steam tube (1) there being arranged a Venturi tube (3) into which there issue at least one air suction line (5) and at least one milk suction line (6), characterised in that the internal cross-section of the steam tube (1) becomes the internal cross-section of the Venturi tube (3) smoothly and without disturbance sites, in that the Venturi tube (3) has a convergent, truncated-cone-like acceleration stretch (16) to which there is joined a diverging, truncated-cone-like outlet (4), and in that the air suction line (5) and the milk suction line (6) issue into the Venturi tube (3) in the region of the nozzle throat (7) formed by the junction between the acceleration stretch (16) and the outlet (4).

2. A device in accordance with Claim 1, characterised in that the steam tube (1), the Venturi tube (3) and the air suction line (5) are formed in one piece.

3. A device in accordance with Claim 1 or 2, characterised in that the air suction line (5) and the milk suction line (6) issue into the Venturi tube (3) at an angle equal to or less than 90° relative to the outer surface of the diffusion stretch (4), measured in the direction of the nozzle throat (7).

4. A device in accordance with Claim 1, characterised in that the air suction line (5) and the milk suction line (6) lie in a separate sleeve (18) which is mounted onto the Venturi tube (3) in a positive-locking manner.

5. A device in accordance with Claim 4, characterised in that the air suction line (5) and the milk suction line (6) are formed by a channel located in the interior of the sleeve (18), which channel connects the top side of the sleeve (14 [sic]) to the underside and is in alignment with the inlet duct (10) for air and/or milk into the Venturi tube (3).

6. A device in accordance with Claim 3 or 4, characterised in that the Venturi tube (3) and the sleeve (18) have a centring device (19) which guarantees the positioning of the sleeve (18) for operation.

7. A device in accordance with any one of Claims 4 - 6, characterised in that the sleeve (18) is removable.

8. A device in accordance with Claim 1, characterised in that the Venturi tube (3) is formed by a separate attachment (15) which also comprises the air suction line (5) and the milk suction line (6).

9. A device in accordance with Claim 8, characterised in that the attachment (15) is connected to the steam tube (1) in a positive-locking manner by means of a screw connection or plug-in connection.

10. A device in accordance with Claim 8 or 9, characterised in that the attachment (15) is removable.

11. A device in accordance with any one of Claims 1 - 10, characterised in that the component parts coming into contact with milk are composed of a material having poor heat conductivity.

## Revendications

1. Dispositif pour préparer du lait en mousse pour cappucino (boisson à base de lait et de café), qui peut être utilisé en tant qu'équipement accessoire pour des machines à café, des percolateurs et d'autres appareils, qui sont équipés d'un générateur de vapeur chaude et d'un tuyau à vapeur (1), et dans lequel, à l'extrémité de sortie du tuyau à vapeur (1), est disposé un venturi (3), dans lequel débouchent au moins un conduit d'aspiration d'air (5) ainsi qu'au moins un conduit d'aspiration de lait (6), caractérisé en ce que la section transversale intérieure du tuyau à vapeur (1) se prolonge, avec une forme lisse et sans zone de perturbation, par la section transversale intérieure du venturi (3), en ce que le venturi (3) possède un tronçon d'accélération convergent (16) de forme tronconique, auquel se raccorde une sortie divergente (4) de forme tronconique, et en ce que le conduit (5) d'aspiration d'air et le conduit (6) d'aspiration de lait débouchent dans le venturi (3), au voisinage du col de buse (7), qui est formé par la zone de raccordement entre le tronçon d'accélération (16) et la sortie (4).

2. Dispositif selon la revendication 1, caractérisé en ce que le tuyau à vapeur (1), le venturi (3) et le conduit d'aspiration d'air (5) sont formés en une seule pièce.

3. Dispositif selon la revendication 1 ou 2, caractérisé en ce que le conduit d'aspiration d'air (5) et le conduit d'aspiration de lait (6) débouchent dans le venturi (3), sous un angle égal ou inférieur à 90° par rapport à la surface latérale du tronçon de diffusion (4), mesure en direction du col de buse (7).

4. Dispositif selon la revendication 1, caractérisé en ce que le conduit d'aspiration d'air (5) et le conduit d'aspiration de lait (6) sont situés dans une douille séparée (18), qui est montée selon une liaison par formes complémentaires sur le venturi (3).

5. Dispositif selon la revendication 4, caractérisé en ce que le conduit d'aspiration d'air (5) et le conduit d'aspiration de lait (6) sont formés par une rainure située dans la face intérieure de la douille (18), rainure qui relie la face supérieure de la douille (18) à sa face inférieure et qui est alignée avec le canal d'entrée (10) pour l'air et/ou le lait dans le venturi (3).

6. Dispositif selon la revendication 3 ou 4, caractérisé en ce que le venturi (3) et la douille (18) possèdent un dispositif de centrage (19), qui garantit le positionnement fonctionnel de la douille (18).

7. Dispositif selon l'une des revendications 4 à 6, caractérisé en ce que la douille (18) est amovible.

8. Dispositif selon la revendication 1, caractérisé en ce que le venturi (3) est formé par un élément auxiliaire séparé (15), qui contient également le conduit d'aspiration d'air (5) et le conduit d'aspiration de lait (6).

9. Dispositif selon la revendication 8, caractérisé en ce que l'organe auxiliaire (15) est relié selon une liaison par formes complémentaires au tuyau à vapeur (1), au moyen de vis ou par enfichage.

10. Dispositif selon la revendication 8 ou 9, caractérisé en ce que l'élément auxiliaire (15) est amovible.

11. Dispositif selon l'une des revendications 1 à 10, caractérisé en ce que les composants, avec lesquels le lait vient en contact, sont réalisés en un matériau mauvais conducteur de la chaleur.
